# EUROPEAN PATENT APPLICATION

(11) **EP 3 871 568 A1**
(43) Date of publication of application: **01.09.2021**
(21) Application number: 19809933.5
(22) Date of filing: 22.10.2019
(51) Int. Cl.: A47J 31/36, A47J 31/46

(54) **SYSTEMS OF DISTRIBUTION OF EDIBLE PRODUCTS WITH IMPROVED ACCESS ARRANGEMENTS AND GEOMETRIES**

(30) Priority: 23.10.2018 PT 2018115095
(71) Applicant: Novadelta-Comércio e Industria de Cafés, S.A., 1950-041 Lisboa (PT)
(72) Inventor: NABEIRO, Rui Miguel, 7370-112 CAMPO MAIOR (PT); DE FIGUEIREDO BRANCO, João André, 1885-091 MOSCAVIDE (PT)
(74) Representative: Ferreira Pinto, Francisca
(86) International application number: PCT/PT2019/050037
(87) International publication number: WO 2020/085929

(57) **Abstract**

The present invention discloses a system of distribution of edible products, comprising an apparatus (1), in particular a beverage preparation apparatus (1), in particular aromatic beverages such as espresso coffee and similar, that comprises a recipient placement disposition (2) adapted for placing a recipient (10, 10') of collection of edible product, and an apparatus casing (3) and an access disposition (4) that provides selective access to said recipient placement disposition (2), for example for placement of said recipient (10, 10'), whereby said apparatus casing (3) and access disposition (4) jointly configure a coherent geometry, devoid of cavities or projections, at least said access disposition (4) is closed.

## Description

### Field of the invention

The present invention refers to the field of systems for distribution of edible products, for example preparation of aromatic beverages by means of extraction of a respective substance, in particular systems with beverage discharge means into a drinking recipient along a direction opposite the direction of the gravity force.

### Background of the invention

The prior art presents several solutions of beverage discharge in beverage preparation machines.

In particular in the case of aromatic beverages such as for example espresso type coffee, this beverage discharge is a relevant process with potential impact on the beverage quality obtained in the recipient. In fact, in particular in the case of espresso type coffee, the main characteristics of the discharge flow determines several aspects as the production of creme and retention thereof inside the cup, and the variation of temperature as a result of the exposition to air during the discharge to the cup.

The document DE 2009 048233 A1 discloses a system of the type of the present invention whereby portions of edible substance are provided to a collection space by means of rising of a lid-like disposition that comprises the beverage discharge means. This solution presents construction complexity and ergonomic constrains. Moreover, said lid-like disposition does not provide selective access to said beverage discharge means.

The document WO 2014/086915 A1 discloses a similar system whereby there seems to be an opening for introduction of portion of edible substance and a beverage discharge provided at a similar height. However, the document does not disclose a compact and ergonomic disposition of said elements.

The document WO 2015/084203 A1 filed by the author of the present application discloses a system for preparation of aromatic beverages with particularly reduced configuration and dimensions, so that provide advantages in terms of portability of the apparatus.

The document WO 2017/200409 A1 also filed by the author of the present application discloses a system for preparing aromatic beverages with an optimized beverage discharge disposition and also presenting advantageous configurations of the apparatus.

### General description of the invention

The objective of the present invention is to provide a system of distribution of edible products, in particular including an apparatus and a recipient that can be operatively placed on a recipient placement disposition of said apparatus, and presenting a discharge of edible product associated with said recipient placement disposition, in particular an upwards-oriented product discharge, said apparatus being adapted so that presents an access disposition that can occlude the placement disposition and configure, eventually together with the apparatus casing, at least part of the visible exterior envelope of apparatus, so as to provide a simple, compact and ergonomic construction, that minimizes the possibility of accumulation of dust in the discharge of edible product and renders easier to clean the exterior of the apparatus.

This objective is solved according to the present invention by means of a system of distribution of edible products according to claim 1.

In particular, the objective above is solved by means of a system comprising an apparatus presenting an access disposition that provides occlusion and selective access to said recipient placement disposition, and that configures, eventually together with the apparatus casing, at least part, preferentially the totality of the exterior envelope of apparatus visible to a user, and whereby a reference surface and/or volume of the exterior envelope of the apparatus presents a regular shape, in particular a coherent geometry, devoid of concavities and openings.

In particular, the access disposition is adapted so that confines the recipient placement disposition, and respective product discharge, relative to the exterior in case in the closed position, and provides placement of recipient, for example drinking recipient, on the placement disposition in case is in at least one other position, including in an open position.

Said access disposition can be configured as at least part of the exterior envelope of apparatus, can correspond to the only part of the exterior envelope of apparatus, or can form such exterior envelope together with a part of apparatus casing.

The access disposition and the apparatus casing can provide adjacent and concomitant exterior surfaces of exterior envelope, preferentially in a substantially continuous alignment and of at least one of similar material and similar visual aspect.

It is preferred when the access disposition and apparatus casing are the only two parts that form the exterior envelope of the apparatus.

The access disposition and apparatus casing can jointly provide at least most part of the material exterior envelope of said apparatus, preferentially the totality of the material exterior envelope directly exposed to the local environment.

Said access disposition can be provided as a planar-like shape, for example of lid type or similar, preferentially with a plane exterior surface devoid of openings, adapted so that can totally cover and provide access to said placement disposition, including possibility of placing a drinking recipient upon the product discharge associated with the recipient placement disposition.

The access disposition and apparatus casing can jointly configure at least part of a coherent geometry, or a set of at least part of coherent geometries, that preferentially corresponds at least approximately to the exterior envelope of said apparatus.

Said access disposition is devoid of any fluid passageway.

In the scope of the present invention, the expression "coherent geometry" is understood as the geometry of a regular volume, including cube, prisms, cones, pyramids, cylinders, and spheres.

The access disposition and apparatus casing can jointly define a reference surface of exterior envelope of the apparatus, both developing on a single plane and in substantially continuous manner, devoid of concavities or openings, preferentially at least part, more preferentially the totality of at least one region of apparatus visible to the user.

The access disposition and apparatus casing can jointly define a reference volume or a composition of reference volumes, of geometry or at least part of geometry, at least approximately regular, such as for example at least part of a cylinder, of a cube, of a cone frustum, of a pyramid frustum, or similar, along at least part, preferentially at least most part, particularly preferentially the totality the height of the exterior envelope of apparatus, preferentially along at least most part of the height of the apparatus casing, including the top region of the apparatus casing.

The apparatus casing can present a top region and a base region with a cross-section in top view of similar shape, including a square, a circle, whereby the dimension of at least one of said top and base regions is smaller than the other.

The apparatus casing can present a non-rectangular cross-section when seen in at least one of: side view, frontal view and top view.

The access disposition and apparatus casing can jointly configure volume geometry, in particular a volume of regular or concomitant shape, or a composition of volume geometries, that does not correspond to a regular parallelepiped.

The apparatus casing can configure at least approximately the exterior shape of the apparatus.

The apparatus casing can present at least one of two total dimensions and two similar dimensions of the apparatus, preferentially including at least one height and one width of the apparatus.

In particular, the access disposition is adapted so that confines the recipient placement disposition, and respective product discharge, relative to the exterior in case in closed position, and provides placement of the recipient, for example drinking recipient, on the placement disposition in case in at least one other position, including an open position.

The access disposition can present a lid-like shape, or similar, and can be adapted so that can operated between a closed position and at least one unclosed position where provides access for placement of a recipient on the placement disposition.

The access disposition can be associated to the apparatus casing and can be adapted so that can operated between a closed position and an open position, in functional connection with the remanding apparatus casing.

The access disposition can be actuated manually or by mechanical means.

Said apparatus can present a recipient placement disposition adapted so that provides support for placement of at least one type of recipient for collection of said edible product, for example a drinking recipient, such as a glass or a cup. In particular, the recipient is adapted so that can be placed in operative manner, including so that can be retained on said recipient placement disposition and that said product can be discharged in a direction opposite to the gravity force.

The apparatus can present a discharge of edible product associated with said recipient placement disposition and adapted so as to inject said product, for example beverage, along the direction contrary the gravity force.

The apparatus can be adapted for preparing beverages, in particular of aromatic beverages such as for example espresso type coffee, based upon the injection of a fluid into an extraction device and mixture thereof with a corresponding portion of edible substance introduced through a passage of introduction, thereby generating residues that can be collected in a collection recipient that provides part of the apparatus casing.

The apparatus can present a passage of introduction of portions adapted for collecting a portion of edible substance, optionally provided inside of a capsule, and in connection with said extraction device.

The apparatus can present a recipient placement disposition and an introduction passageway at least approximately on a common surface that develops along a single plane, preferentially on a surface of the envelope of the apparatus top part.

It is preferred when said apparatus top part only presents said recipient placement disposition and said introduction passageway for portions of edible substance.

Said top part of apparatus can present the access disposition, and is preferentially devoid of any other elements of interaction with or operation of the apparatus.

The access disposition can be provided so that can selectively cover the recipient placement disposition and the introduction passageway for portions.

### Description of the figures

The invention shall hereinafter be explained in greater detail based upon preferred embodiments and on the attached Figures.

The Figures show, in simplified schematic representations:
- Figure 1:: side and frontal views (right-hand side) of an apparatus (1) for preparing beverages of a system of the type of the present invention, according to prior art;
- Figure 2:: diagram of a drinking recipient (1) operatively placed on a placement disposition (2) operatively associated in fluid connection to an apparatus (3), according to prior art;
- Figure 3:: frontal and top views (right-hand side) of a first embodiment of an apparatus (1) for preparing beverages of a system according to the present invention, and with the access disposition (4) in a closed position;
- Figure 4:: side views of the embodiment according to Figure 3;
- Figure 5:: views corresponding to those of Figure 3, with the access disposition (4) in an open position of a first embodiment thereof;
- Figure 6:: views corresponding to those of Figure 3, with the access disposition (4) in an opening position of a second embodiment thereof;
- Figure 7:: front and top views (right-hand side) of a second embodiment of an apparatus (1) for preparing beverages of a system according to the present invention, and with the access disposition (4) in a closed position;
- Figure 8:: side views of the embodiment according to Figure 7;
- Figure 9:: views corresponding to those of Figure 7, with the access disposition (4) in an open condition of a first embodiment thereof;
- Figure 10:: views corresponding to those of Figure 7, with the access disposition (4) in a condition of first moment of opening of a second embodiment thereof;
- Figure 11:: views corresponding to those of Figure 10, in a condition of second instant of actuation of the access disposition (4);
- Figure 12:: views corresponding to those of Figure 10, in a condition of third instant of actuation of the access disposition (4);
- Figure 13:: views corresponding to those of Figure 10, in a condition of fourth instant of actuation of the access disposition (4);
- Figure 14:: front and top views (on the right-hand side) of a third embodiment of a beverage preparation apparatus (1) of a system according to the present invention, and with the access disposition (4) in a closed position;
- Figure 15:: side views of the embodiment according to Figure 14;
- Figure 16:: views corresponding to those of Figure 7, with the access disposition (4) at an open condition in a first embodiment thereof;
- Figure 17:: side and top views of another preferred embodiment of system according to the present invention, with access disposition (4) in a closed position;
- Figure 18:: side and top views of another preferred embodiment of system according to the present invention, with access disposition (4) in an open position;
- Figure 19:: side and top views of another preferred embodiment of system according to the present invention;
- Figure 20:: side and top views of another preferred embodiment of system according to the present invention;
- Figure 21:: side and top views of another preferred embodiment of system according to the present invention;
- Figure 22:: side and top views of another preferred embodiment of system according to the present invention;
- Figure 23:: side and front views (on the right-hand side) of another preferred embodiment of a system according to the invention in a closed position;
- Figure 24:: side and front views (on the right-hand side) of another preferred embodiment of a system according to the invention in an open position.

### Detailed description of the invention

In the case of the embodiment described hereinafter and that corresponds to a preferred embodiment of the invention, without exclusion of other in the scope thereof, the apparatus of distribution of edible products, is a beverage preparation apparatus (1), for example of espresso coffee, based upon a portion (7) of edible substance, for example roasted and ground coffee, that is impinged by a pressurized fluid in a product preparation device (5), for example an extraction device that can be actuated between an open and closed position, and vice-versa, and of which results a beverage flow that is discharged to a product recipient (10, 10'), in this case a drinking recipient, operatively placed in a recipient placement disposition (2).

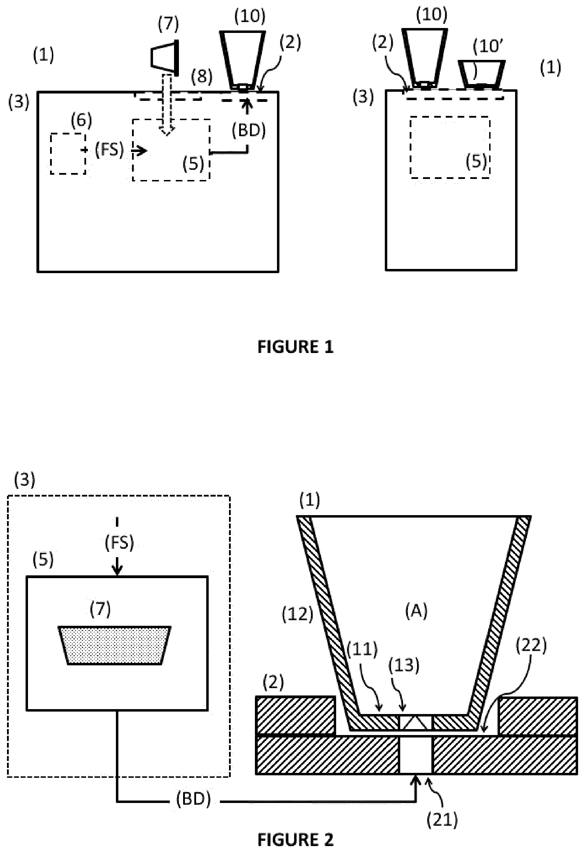

**Figure 1** represents side view (on the left-side of the drawing) and front view of an apparatus (1) for preparing beverages of a system of the type of the present invention, including recipients (10, 10') operatively placed on a placement disposition (2) of said apparatus (1), whereas **Figure 2** represents a functional diagram of discharge of edible product (BD) in a system of the type of the present invention.

As represented, said apparatus (1) presents an extraction device (5), in this case provided inside of the apparatus casing (3) of said apparatus (1), whereby said extraction device (5) is provided so that can collect a portion (7) of beverage precursor edible substance, eventually contained inside of a capsule.

Said apparatus (1) further presents at least one introduction passageway (8) that provides the supply of said portion (7) of edible substance to said extraction device (5).

Moreover, said apparatus (1) can include a fluid reservoir (not represented), as well as a fluid pressurization device (6) and a fluid heating device (not represented), so that can supply a flow (FS) at a temperature comprised between 60 and 100 °C and at a pressure comprised between 1 e 20 bar, so as to interact with said edible substance. These means are known to the skilled in the art so that one herewith abdicates from a more detailed representation or description thereof.

After extraction of the beverage, the beverage discharge flow (BD) is conducted to an exit of said extraction device (5) and to a placement disposition (2) that includes a beverage discharge (21) disposed downstream thereof so that the beverage discharge to the interior of the beverage recipient (10, 10') unfolds through said base zone (11) thereof.

The recipient (10, 10') can present flow regulation means (13) disposed in a base portion (11) thereof an adapted so that only provide flow entry into said recipient if the flow pressure is bigger than a previously defined flow pressure.

The placement disposition (2) can present at least one of:
- a beverage discharge device (21) that includes at least one flow exit generally oriented upwards, whereby said beverage discharge device (21) is functionally connected with the extraction device (5) by means of a tube, preferentially of flexible type;
- a recipient placement surface (22) adapted for placement of at least one type of recipient (10, 10'), preferentially at least two types of recipient (10, 10') presenting at least one of different dimensions and different configurations;
- engagement means (23) associated with said recipient placement surface (22) and adapted so that provide removable retention of the recipient (10, 10') on said placement disposition (2).

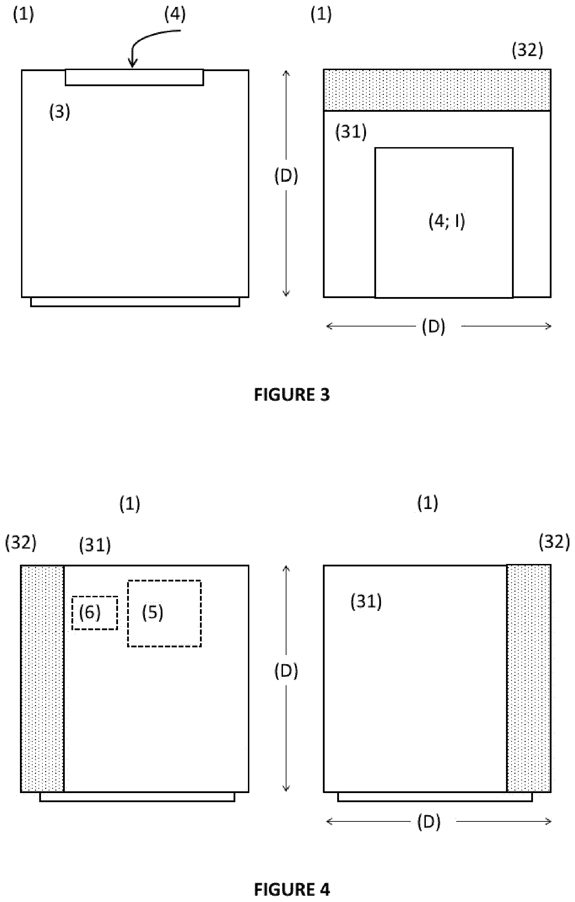

**Figures 3** to **6** represent a first embodiment of a system of the type of Figures 1 and 2, and according to the present invention.

As represented, the apparatus (1) in this case presents an apparatus casing (3) and an access disposition (4) that jointly define, at least substantially, the volume geometry of the apparatus (1), in particular in a coherent geometry that in this case corresponds at least approximately to a cube.

Advantageously, said access disposition (4) provides selective access to said placement disposition (2) and product discharge (21), so that prevents the possibility of accumulation of dusts and other residues as a result of exposition to ambient air of a given location of use of the apparatus (1).

It is particularly preferred, when the product discharge (21) is herewith selectively confined with relation to the exterior of the apparatus (1), so that the possibility of contamination thereof is mitigated.

Moreover, said apparatus casing (3) and access disposition (4) jointly define a material volume that is preferentially substantially continuous, devoid of projection or cavities.

According to a particularly advantageous aspect, said apparatus casing (3) and access disposition (4) jointly configure a volume that at least approximately corresponds to a coherent geometry, in particular regular, including a cube, a cone frustum, whereby said volume is devoid of projections or cavities, at least in case said access disposition (4) is at a closed position.

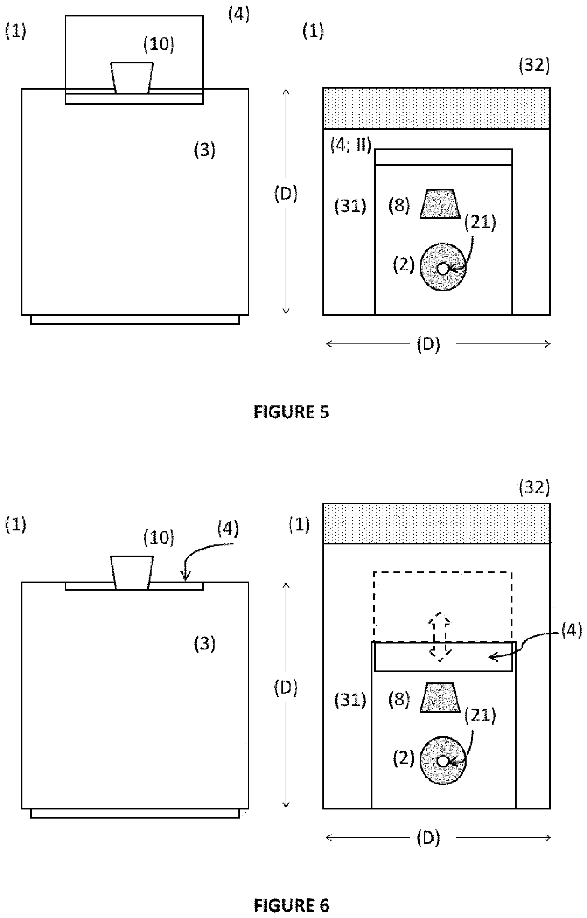

The access disposition (4) can be actuated, for example by mechanical actuation means triggered by a pressure gesture thereupon, in a rotation movement between a closed position - Figure 3 - and an open position (II) - Figure 5 - where provides access to the recipient placement disposition (2), product discharge (21) and introduction passageway (8) of portions adapted for introduction of a portion (7) of edible substance - here not represented -, for example in the form of a capsule.

Alternatively, the access disposition (4) can be actuated in a sliding movement in a plane at least approximately parallel to the plane of said placement disposition (2) - see Figure 6 that represents the access disposition (4) near the open position (II).

It is preferred when the access disposition (4) can occupy at least an intercalary position between the closed (I) and open position (II), for example corresponding to a semi-open position where provides access to the product discharge (21), but not to the introduction passageway (8) of portions.

It is advantageous when said access disposition (4) does not present any cavity, projection or opening. Said access disposition (4) can be provided with at least one of: total dimension and actuation space dimension that corresponds to at least half, preferentially more than half, particularly preferentially at least approximately the width of at least one of: the top region and the frontal region of said apparatus casing (3).

Moreover, it is advantageous when at least one of apparatus casing (3) and access disposition (4) further presents functional connection means (44) adapted so as to provide at least one:
- actuation of the access disposition (4) with relation to at least one of: apparatus casing (3) and other part of said access disposition (4), and
- apprehension of at least one of: closed condition (I) and open condition (II) of said access disposition (4).

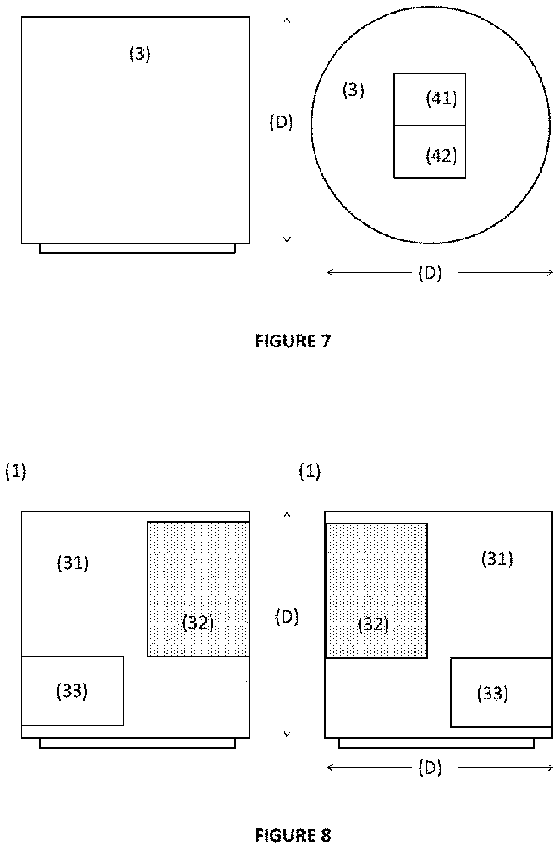

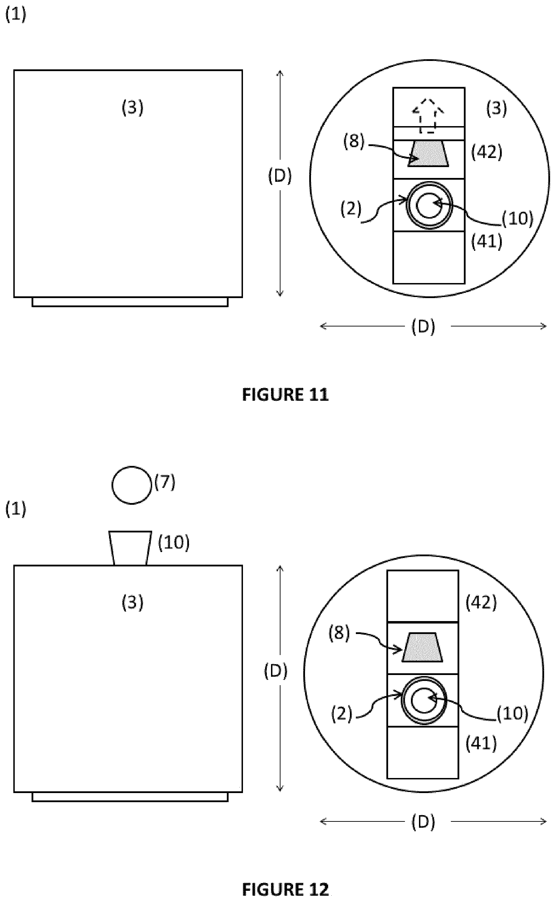

**Figures 7** to **13** represent a second embodiment of a system according to the present invention.

As represented, the apparatus (1) presents in this case an apparatus casing (3) and an access disposition (4) that jointly define, at least substantially, the volume geometry of the apparatus (1), in particular in a coherent geometry that in this case corresponds at least approximately to a cylinder.

It is preferred when, as represented in Figure 8, the apparatus casing (3) includes parts of casing (32, 33) associated to fluid collection means (32) and residues collection means (33).

The access disposition (4) in this case comprises two access parts (41, 42) that can be actuated separately, thereby providing access to the placement disposition (2) and product discharge (21), and to the introduction passage (8) of portions.

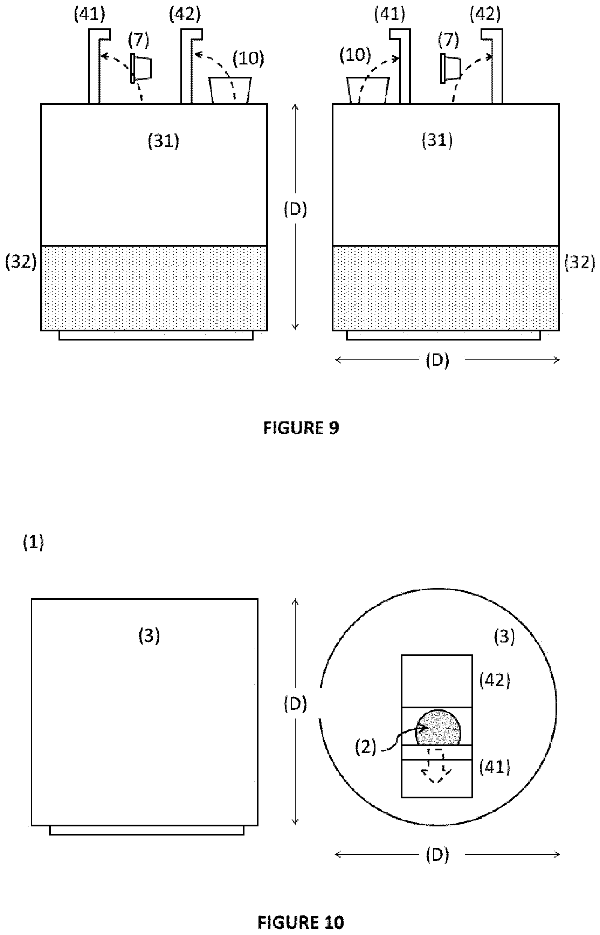

As represented in Figure 9, the actuation movement of said access parts (41, 42) can be a rotation movement and can develop in a plane different from the apparatus casing (3).

Alternatively, as represented in Figures 10 to 13, the actuation movement of the two access parts (41, 42) can be a sliding movement and develop in a plane at least approximately parallel to the plane of the apparatus casing (3).

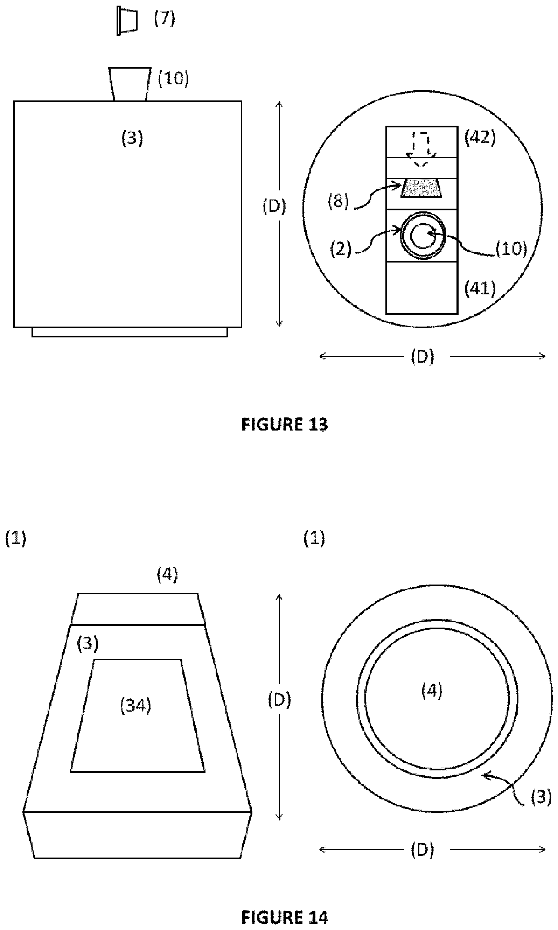

**Figures 14** to **21** present embodiments of apparatus (1) according to the present invention, whereby the apparatus casing (3) and the access disposition (4) jointly define a coherent geometry, such as for example a cone frustum, or a composition of coherent geometries, such as for example several cone frustums.

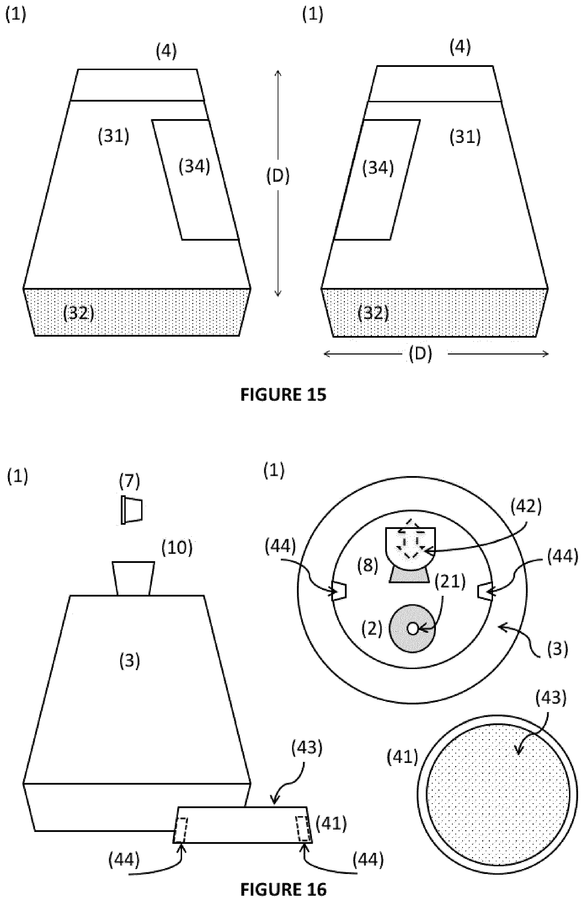

It is particularly preferred when the apparatus casing (3) and the access disposition (4) jointly define a coherent geometry, or a set of at most three, preferentially at most two coherent geometries, for example two cone frustums, as represented in Figures 16 to 18.

Moreover, it is particularly preferred when the access disposition (4) extends over the entire top part of the apparatus, thereby defining the coherent geometry of the apparatus (1).

The access disposition (4) can be provided as a lid adapted so that can be retained and removed from the top region of the apparatus casing (3).

The apparatus casing (3) can present a use interface (34) adapted for providing at least one of: manipulation, portability, energy, information display, as can be observed in Figure 15.

Moreover, the apparatus casing (3) and the access disposition (4) can present at least two regions with materials of different optical transmission properties, including opaque, transparent, semi-transparent or different degrees thereof, whereby it is preferred when the apparatus casing (3) presents at most two different materials, particularly preferentially only one type of material.

As represented in Figure 16, at least one of the apparatus casing (3) and access disposition (4) can further present functional connection means (44) adapted so as to provide apprehension of at least one of: closed condition (I) and open condition (II) of said access disposition (4). It is advantageous when they provide an indication that is perceptible by the user of a correct closed condition of the access disposition (4). This input can be further used for regulation of a cycle of preparation of edible product, and other operations of the apparatus (1).

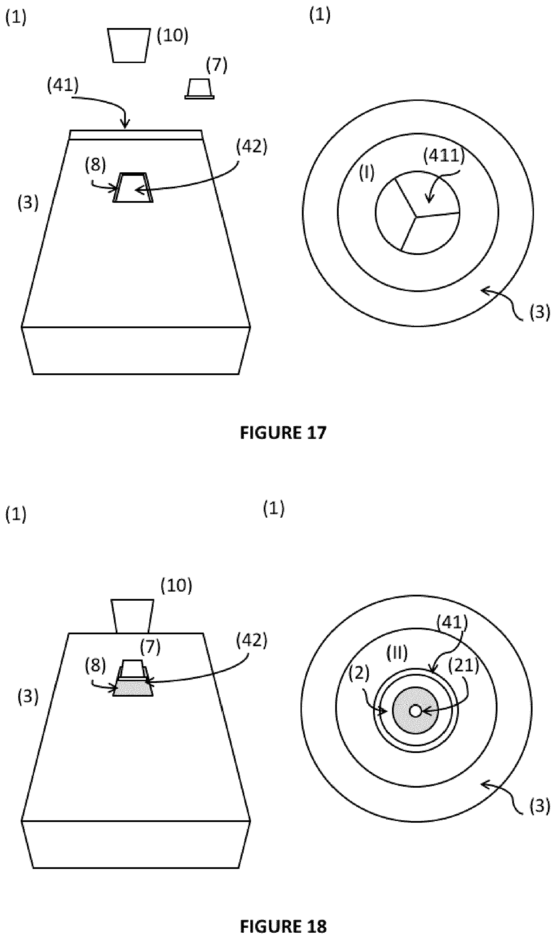

**Figures 17** and **18** represent an embodiment whereby the apparatus (1) presents an access disposition (4) with a first access part (41) that provides covertures of the placement disposition (2) on the top region of the apparatus (1), and a second access part (42) associated to an introduction passageway (8) for portions disposed in a lateral region of the apparatus casing (3).

Said first access part (41) is provided as a mechanism of diaphragm type that can be actuated between a closed position (I) and an open position (II), and vice-versa.

Said second access part (42) can be provided as a lid that can be pushed inwards by a portion (7) of edible substance, for example by swivelling around an axis developing on a top edge of the second access part (42), and automatically recovering the initial position thereafter.

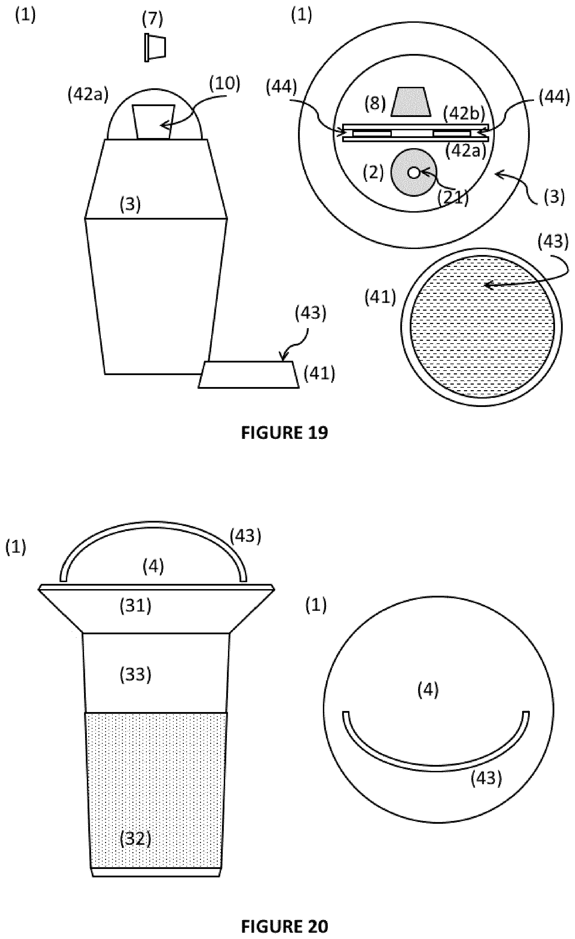

The access disposition (4) can, as represented in **Figure 19****,** present a first access part (41) in a lid shape and adapted so that can cover a second access part (42a, 42b) that on their hand provide discriminated access to the placement disposition (2) and introduction passageway (8) of portions of edible substance.

As further represented in Figure 19, the access disposition (4) can further present functional connection means (44), in the case represented in the simple form of rotation axis common to both access parts, adapted so as to provide actuation, for example by manual or mechanic means, of at least part of said access disposition (4) between respective closed condition (I) and open condition (II).

Said access disposition (4) can further comprise a use interface (43) that can be an information interface, an energy interface, or a manipulation interface.

The information interface can be of the screen type, including of the type interactive screen by touch screen.

The energy interface can be a heating surface for preheating of recipients (10).

The manipulation interface can further be a handle (Figure 20) adapted so that enables the manipulation of the access disposition (4), opening and closing, and that further enables that the apparatus (1) can be carried by hand.

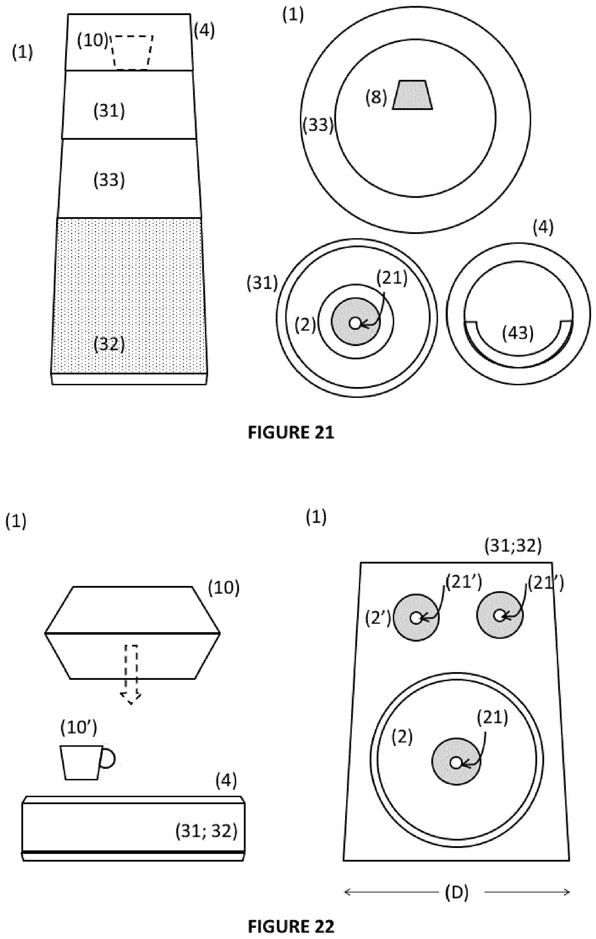

As represented in Figure 21, the access disposition (4) can be configured so that provides covering of the placement disposition (2) including in case of a recipient (10) being placed on said placement disposition (2).

The system according to the present invention can comprise different types of recipients (10, 10'), including in the form of drinking recipients of cup type, glass and similar, and recipients of teapot type and similar.

**Figure 22** represents an embodiment of system according to the present invention that comprises at least two types of recipients (10, 10'), whereby the apparatus (1) comprises an apparatus casing (3) with the form at least approximately of a board and an access disposition (4) adapted so that can completely cover the top region of said apparatus (1).

The top region further presents two placement dispositions (2, 2') adapted for placing at least one of: a first type of recipients (10) with the function and at least approximately with the shape of a teapot, or similar, and a second type of recipient (10') with the shape of cups, glasses or similar.

It is preferred when one of said placement dispositions (2) is provided so that can discharge a first type of edible product, for example hot water, that can be optionally mixed with another edible substance used in the preparation of a given type of edible product, for example tea, and another of said placement dispositions (2') is provided so that can discharge a second type of edible product, for example coffee of espresso type, that can be optionally mixed thereafter with another type of edible substance, for example milk, or not.

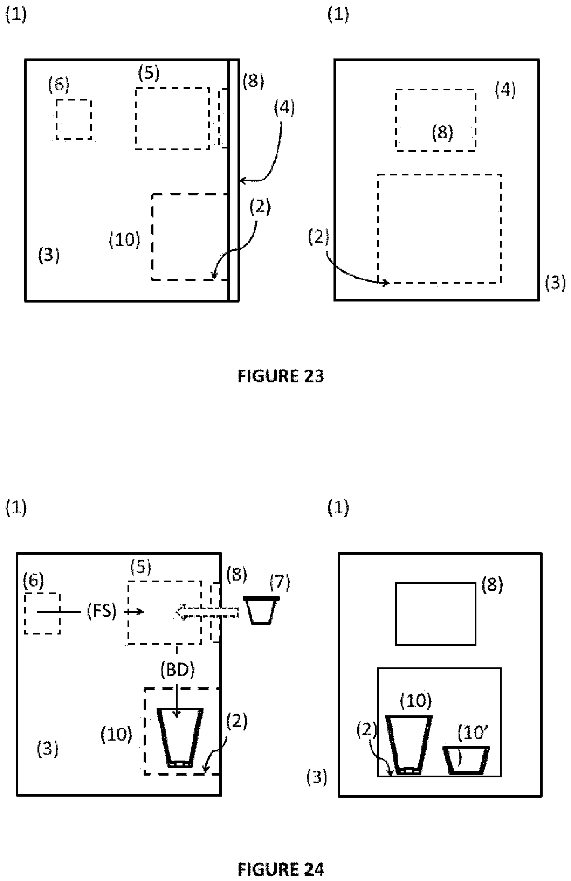

**Figures 23** and **24** represent another preferred embodiment of system according to the invention, whereby an access disposition (4) is provided as a lid that can cover the whole front part of the apparatus (1).

It is preferred when the access disposition (4), in case of being placed in the closed position (I) as represented in Figure 21, at least approximately configures a regular geometry together with the apparatus casing (3), for example a cube, and thereby providing an envelope devoid of projections or cavities.

Said access disposition (4; 41, 42) can be actuated by a movement between a closed position (I) and an open position (II) thereof, and vice-versa, whereby said movement corresponds to at least one of: a rotation movement and a translation movement of at least part of said access disposition (4; 41, 42), whereby at least part of said movement is carried out in at least one of: a different plane and a plane at least approximately parallel to the plane where the placement disposition (2) develops, and whereby said movement corresponds to the movement of a single piece, to the movement of a first access part (41) and of at least a second access part (42), preferentially in coordinated manner with each other, to the articulated movement of a plurality of parts, for example of diaphragm type.

Said access disposition (4) can be provided with a general shape of lid type, hood, or similar, door, window or similar, for example of planar type, and as a single piece or as a plurality of pieces.

Said access disposition (4) can be adapted as at least one of:
- does not extend completely above, preferentially develops completely laterally surrounded by the apparatus casing (3) in case in a closed position (I),
- develops completely above the apparatus casing (3) in case in a closed position (I);
- develops in at least most part, preferentially in all the top part of said apparatus (1).

## Claims

1. System for distribution of edible products,
said system including an apparatus (1) for distribution of edible products, for example for preparation of beverages based upon an edible substance,
said apparatus (1) presenting a placement disposition (2) adapted so that provides support for placement of at least one type of recipient (10, 10') for collection of said edible product, for example a drinking recipient, and associated with a beverage discharge (21), in particular provided so that the edible product can be discharged along a direction opposite to the gravity force,
said apparatus (1) can further present an apparatus casing (3) that provides part of the exterior envelope of apparatus visible by a user,
**characterized**
**in that** said apparatus (1) presents an access disposition (4) that can be placed in a closed position (I) whereby occludes the product discharge (21), and configures at least part of the exterior envelope of apparatus (1) with a coherent geometric shape, devoid of concave regions or openings.

2. System according to claim 1, **characterized**
**in that** in case the access disposition (4) is at the closed position (I), the access disposition (4) and the apparatus casing (3) jointly configure an exterior envelope with a Euclidean geometric shape, whereby said geometric shape preferentially corresponds to at least one of:
- at least most part, preferentially the totality of the exterior top surface of the apparatus (1), including in case the top surface is the only exterior surface of the apparatus (1) visible to a user,
- at least most part, preferentially the totality of the exterior surface of the apparatus (1) visible to a user,
- a volume of apparatus (1) that corresponds to a coherent geometric shape, including regular geometry shape, association of regular geometry shapes, or part of at least one regular geometry shape, and
- a volume of apparatus (1) devoid of protuberances and cavities associated with the edible product discharge (21), and with no product discharge (21) exposed to the exterior of the apparatus (1), at least in the top, frontal and posterior portions of the exterior envelope thereof.

3. System according to claim 1 or 2, **characterized in that** the access disposition (4) and the apparatus casing (3) jointly configure a reference surface and/or volume whereby all surfaces are materially continuous and of similar curvature, including planar or curved surface, at least in the vicinity region of said access disposition, and preferentially also along at least most part of the exterior surface at least of the top, frontal and posterior portions of the exterior envelope of said apparatus (1), preferentially also of the lateral portions thereof, with exception of border regions, for example of slot type, such as for example at least one of:
- between said access disposition (4) and said apparatus casing (3), including a first casing part (31) of said apparatus casing (3), and
- between optionally actionable second and third casing parts (32, 33) of said apparatus casing (3), and said apparatus casing (3),
whereby said second casing part (32) is preferentially provided as a reservoir of preparation fluid, for example water or milk, of said apparatus (1), and said third casing part (33) is preferentially provided as a recipient for collection of residues of said apparatus (1).

4. System according to any one of claims 1 to 3, **characterized in that** the apparatus casing (3) comprises a first casing part (31) provided at least in a vicinity region of, and preferentially adjacent to the access disposition (4) in the closed position (I), and so that configure a common plane of exterior surface at least in the common vicinity region, and **in that** at least one of: apparatus casing (3) and access disposition (4), presents a first and a second operable parts (32, 33; 41, 42) configured so that can be moved with relation to the first casing part (31), whereby the actuation of at least one of said first and second operable parts (32, 33; 41, 42) can be carried in at least one of: in joint manner with, and in autonomous manner relative to the other operable part.

5. System according to any one of claims 1 to 4, **characterized in that** at least one of apparatus casing (3) and access disposition (4), further presents at least one respective use interface (34, 43) adapted for providing at least one of: handling, portability, energy, information display, whereby said use interface (34, 44) is preferentially configured so that can be swivelled down and thereby confined in the reference surface and/or volume of apparatus (1) defined by the apparatus casing (3) and access disposition (4).

6. System according to any one of claims 1 to 5, **characterized in that** the apparatus casing (3) and access disposition (4) jointly define a reference volume or a composition of volumes, of an at least approximately regular geometry, or part of geometry, such as for example part of a cylinder, of a cube, of a frustum cone, frustum pyramid, or similar, along at least part, preferentially at least most part, particularly preferentially the totality of the height of the exterior envelope of said apparatus (1), preferentially along at least most part of the height of said apparatus casing (3), including the top region of said apparatus casing (3), and **in that** said apparatus casing (3) presents a top region and a base region with a cross-section in top view of similar shape, including a square, a circle, whereby the dimension of at least one of said top and base regions is smaller than the other.

7. System according to any one of claims 1 to 6, **characterized in that** said apparatus casing (3) presents a non-rectangular cross-section when seen in at least one of: in side view, in frontal view and in top view, and
**in that** said apparatus casing (3) and access disposition (4) jointly define a volume geometry, or a composition of volume geometries, that does not correspond to a regular parallelepiped.

8. System according to any one of claims 1 to 7, **characterized in that** said apparatus casing (3) and access disposition (4) jointly configure the shape and at least one of the exterior surface and volume of the entire apparatus (1), and
**in that** at least one of said apparatus casing (3) and access disposition (4) at least approximately configures at least two total dimensions (D) of the apparatus (1), preferentially including at least the total height and width of the apparatus (1) .

9. System according to any one of claims 1 to 8, **characterized in that** said access disposition (4) is adapted so that provides selective access at least to the product discharge (21), preferentially also to the totality of the placement disposition (2), whereby said access disposition (4) can thereby completely confine a space defined by said recipient placement disposition (2) relative to the exterior of said apparatus (1) in case the access disposition (4) is at the closed position (I).

10. System according to any one of claims 1 to 9, **characterized in that** said access disposition (4) is adapted, in particular operatively associated to said apparatus casing (3), so that can be moved between:
- a closed position (I), or of retention, where confines the product discharge (21), preferentially also the placement disposition (2), relative to the exterior of the apparatus (1), at least in case said recipient (10, 10') is not placed hereon, and
- at least an open position (II), or of removal, where provides access to the product discharge (21), optionally also to the rest of placement disposition (2), for operative placement of said drinking recipient (10, 10') thereon, in particular on the product discharge (21).

11. System according to any one of claims 1 to 10, **characterized**
**in that** said access disposition (4) further provides selective access, to an introduction passage (8), adapted for introduction of portions (7) of edible substance, preferentially disposed in a plane similar to the plane where said placement disposition (2) is disposed, and/or in the proximity of the discharge product (21), so that in case at the closed position (I), the access disposition (4) can also cover the introduction passageway (8) relative to the exterior.

12. System according to any one of claims 1 to 11, **characterized**
**in that** said access disposition (4) provides selective access in separate manner to the product discharge (21), and to an introduction passageway (8), whereby said introduction passageway (8) is preferentially also associated with the placement disposition (2).

13. System according to any one of claims 1 to 12, **characterized**
**in that** said access disposition (4) presents a first and second access parts (41, 42), whereby a first access part (41) confines and provides access at least to said placement disposition (2), including product discharge (21), and a second access part (42) provides selective access to said introduction passageway (8), and
**in that** said first and second access parts (41, 42) are adapted so that the opening of at least one thereof is only provided in case of indication of operative opening of the other, preferentially at least the opening of said second access part (42) to the introduction passageway (8) of portions, is provided only in case the recipient (10, 10') is operatively placed on said placement disposition (2).

14. System according to any one of claims 1 to 13, **characterized**
**in that** said access disposition (4) is provided so that can be actuated in manual and/or mechanic manner, whereby said access disposition (4) can preferentially be retained in removable manner on the closed position (I), and
**in that** the actuation mechanism of said first and second access parts (41, 42) is provided as at least one of: similar, common, and different.

15. System according to any one of claims 1 to 14, **characterized**
**in that** at least part of said access disposition (4; 41, 42) is adapted so that can be actuated, for example by electromechanical means, in a movement triggered by automatic detection of at least one of:
- proximity of a recipient (10) relative to the access disposition (4), in particular in a spatial field of detection that develops in the projection of the access disposition (4);
- action of manual pressure upon the access disposition (4);
- at least one of gesture command and voice command, by means of a respective user interface,
whereby it is preferred when said automatic detection only triggers the actuation of the opening movement from said closed position (I), and the actuation of the closing movement from an open position (II) is triggered by at least one of:
- previously defined operation event of the apparatus (1),
- automatic counting of previously define period of time after a previously defined operation event of the apparatus (1) .
